# EUROPÄISCHE PATENTSCHRIFT

(11) **EP 2 234 235 B1**
(45) Veröffentlichungstag und Bekanntmachung des Hinweises auf die Patenterteilung: **18.01.2017**
(21) Anmeldenummer: 09155909.6
(22) Anmeldetag: 23.03.2009
(51) Int. Cl.: H02G 13/00

(54) **Stromübertragungseinrichtung, insbesondere Blitzschutzeinrichtung**
Electricity transfer device, in particular lightning protection device
Dispositif de transmission de courant, notamment dispositif pare-foudre

(43) Veröffentlichungstag der Anmeldung: 29.09.2010
(73) Patentinhaber: Schunk Bahn- und Industrietechnik GmbH, 35435 Wettenberg (DE)
(72) Erfinder: Zilch, Peter, 12559, Berlin (DE); Domes, Matthias, 61231, Bad Nauheim (DE)
(74) Vertreter: advotec.

(56) Entgegenhaltungen:
- EP-A- 1 568 883
- WO-A-2005/050008
- DE-A1-102004 010 104
- DE-A1-102004 022 299

## Beschreibung

Die vorliegende Erfindung betrifft eine Stromübertragungseinrichtung zur Übertragung von elektrischen Strömen zwischen einer Rotoreinrichtung und einer Statoreinrichtung, insbesondere Blitzschutzeinrichtung für Windkraftanlagen, mit einem Stromübertragungsgehäuse, umfassend einen Statorteil zur Ausbildung eines Stromübertragungskontakts mit der Statoreinrichtung und einen Rotorteil zur Ausbildung eines Stromübertragungskontakts mit der Rotoreinrichtung, wobei der Statorteil und der Rotorteil jeweils eine drehfest mit dem Statorteil bzw. dem Rotorteil verbundene Kontakteinrichtung aufweisen, die auf einer Drehachse des Rotorteils angeordnet sind und vermittels einer axial wirkenden Andruckeinrichtung mit ihren einander zugewandten Kontaktflächen gegeneinander gedrückt werden, wobei der Rotorteil des Stromübertragungsgehäuses mit einem äußeren Kontaktreifen versehen ist, der zur Herstellung eines Rollkontakts zwischen dem Rotorteil und der Rotoreinrichtung dient.

Eine Stromübertragungseinrichtung der eingangs genannten Art ist aus der DE 10 2004 022 299 A1 bekannt. Derartige Stromübertragungseinrichtungen dienen zur Ableitung von elektrischen Strömen aus rotierenden, stromführenden Teilen, nachfolgend als Rotoreinrichtung bezeichnet, und werden bislang regelmäßig als so genannte "Schleifkontakteinrichtungen" ausgeführt, bei denen ein elektrischer Kontakt, der unter federnder Vorspannung an der Rotoreinrichtung anliegt, zur Abführung des elektrischen Stroms von der Rotoreinrichtung in die relativ zur Rotoreinrichtung feststehende Statoreinrichtung, also beispielsweise ein Maschinengestell, dient. Die hierbei zum Einsatz kommenden Kontakteinrichtungen können aus unterschiedlichen, elektrisch leitenden Materialien bestehen, wobei auch der Einsatz von Kohlenstoffmaterialien zur Ausbildung der Kontakteinrichtung bekannt ist, die den Vorteil aufweisen, den zur elektrischen Stromübertragung notwendigen mechanischen Kontakt zwischen der Kontakteinrichtung und der Rotoreinrichtung möglichst reibungsarm zu gewährleisten und die gleichzeitig aufgrund der neben den Schmiereigenschaften günstigen elektrischen Eigenschaften nur relativ geringe Kontaktwiderstände ausbilden.

Die bekannten Stromübertragungseinrichtungen sind für die Vielzahl unterschiedlicher Applikationen, die in einer geschützten Umgebung stattfinden, vielfach hinreichend zuverlässig bzw. können aufgrund ihrer regelmäßig einfachen Zugänglichkeit mit vertretbarem Aufwand gewartet werden; insbesondere dann, wenn es darum geht, verbrauchte Kontakteinrichtungen auszutauschen.

Anders verhält es sich jedoch bei dem Einsatz derartiger Stromübertragungseinrichtungen in rauer Umgebung oder bei einem Einsatz an Orten, die nur schwer oder möglicherweise unter Gefahren zugänglich sind.

Als Beispiel für eine Installationsumgebung derartiger Stromübertragungseinrichtungen ist hier insbesondere der Einsatz der Stromübertragungseinrichtungen in Windkraftanlagen zu erwähnen. Solche Windkraftanlagen bestehen im Wesentlichen aus elektrischen Generatoren, die in einem Maschinenhaus auf einem nicht selten über 100 Meter hohen Stahlturm angeordnet sind und deren Generatorwelle von einer außen am Maschinenhaus angeordneten Rotorblatteinrichtung zur Stromerzeugung angetrieben wird. Aufgrund der in großer Höhe exponierten Anordnung der Rotorblatteinrichtung kann es leicht zu Blitzeinschlägen in die Rotorblatteinrichtung kommen, die über die mechanische Kopplung einer Rotorwelle der Rotorblatteinrichtung mit der Generatorwelle zu Strom- und Spannungsspitzen im Generatorbereich und damit zu Schäden am Generator oder beispielsweise auch im Getriebe führen können. Um dies zu verhindern, werden Stromübertragungseinrichtungen eingesetzt, die für eine Ableitung von Strömen infolge eines Blitzeinschlages in die Rotorblatteinrichtung von der Rotorwelle in den Turm bzw. eine am Turm angeordnete Erdungseinrichtung sorgen.

Die Anordnung der Stromübertragungseinrichtung im Maschinenhaus und die daraus resultierenden niedrigen Umgebungstemperaturen wirken sich häufig verschleißfördernd aus. Darüber hinaus ergibt sich aus der Installation der Stromübertragungseinrichtung im Maschinenhaus eine nur bedingte Zugänglichkeit, die in jedem notwendig werdenden Wartungsfall voraussetzt, dass Wartungspersonal unter großem zeitlichen Aufwand und schwierigen Bedingungen zunächst an den Installationsort vordringen muss, um dann dort die Wartungsarbeiten vornehmen zu können.

Der vorliegenden Erfindung liegt die Aufgabe zugrunde, eine Stromübertragungseinrichtung vorzuschlagen, die sich durch eine verbesserte Wartungsfreundlichkeit auszeichnet, so dass entsprechende Wartungszeiten möglichst kurz sein sollten.

Diese Aufgabe wird mit einer Stromübertragungseinrichtung mit den Merkmalen des Anspruchs 1 gelöst.

Die erfindungsgemäße Stromübertragungseinrichtung zur Übertragung von elektrischen Strömen zwischen einer Rotoreinrichtung und einer Statoreinrichtung weist ein Stromübertragungsgehäuse auf, das einen Statorteil zur Ausbildung eines Stromübertragungskontakts mit der Statoreinrichtung und einen Rotorteil zur Ausbildung eines Stromübertragungskontakts mit der Rotoreinrichtung umfasst. Zur Stromübertragung zwischen dem Statorteil und dem Rotorteil weisen diese jeweils eine drehfest mit dem Statorteil bzw. dem Rotorteil verbundene Kontakteinrichtung auf, die auf einer Drehachse des Rotorteils angeordnet sind und vermittels einer axial wirkenden Andruckeinrichtung mit ihren einander zugewandten Kontaktflächen gegeneinander gedrückt werden, wobei der Rotorteil des Stromübertragungsgehäuses mit einem äußeren Kontaktreifen versehen ist, der zur Herstellung eine Rollkontakts zwischen dem Rotorteil und der Rotoreinrichtung dient.

Aus dem Vorstehenden wird deutlich, dass bei der erfindungsgemäßen Stromübertragungseinrichtung durch die Anordnung der Kontakteinrichtungen in einem Stromübertragungsgehäuse ein unmittelbarer Kontakt zwischen der Kontakteinrichtung und der Rotoreinrichtung, bei der es sich im Falle einer Windkraftanlage um die von der Rotorblatteinrichtung über Windkraft angetriebene Rotorwelle handelt, vermieden wird. Somit ergibt sich einerseits eine in dem Gehäuse gekapselte Anordnung der Kontakteinrichtungen, so dass Umwelteinflüsse nicht unmittelbar auf die Kontakteinrichtungen einwirken können. Zum anderen wird verhindert, dass es infolge einer Abnutzung der Kontakteinrichtung zu Verunreinigungen an der Rotorwelle oder benachbarter Aggregate kommen kann, wie etwa Verunreinigengen einer benachbarten Scheibenbremseinrichtung der Rotorwelle, die deren Funktion beeinträchtigen könnte.

Trotz der gekapselten Anordnung der Kontakteinrichtungen wird mittels des äußeren Kontaktreifens am Rotorteil des Stromübertragungsgehäuses der notwendige stromleitende Körperkontakt zwischen der Rotoreinrichtung, also etwa der Rotorwelle der Windkraftanlage, und den Kontakteinrichtungen ermöglicht.

Die erfindungsgemäße Stromübertragungseinrichtung ermöglicht also bei einer betriebssicheren Ausgestaltung eine Verringerung der Wartungsintervalle der Stromübertragungseinrichtung bzw. benachbarter Teile oder Aggregate, da eine Verunreinigung von Bereichen außerhalb des Stromübertragungsgehäuses mit Kontaktmaterialabrieb unterbleibt. Darüber hinaus werden durch die ebenfalls innerhalb der Stromübertragungseinrichtung angeordnete Andruckeinrichtung und deren dadurch vor äußeren Einflüssen geschützten Anordnung insbesondere auch Wartungsarbeiten an der Andruckeinrichtung seltener notwendig.

Weiterhin ermöglicht die integrale Anordnung sämtlicher Funktionseinheiten der Stromübertragungseinrichtung in einem Gehäuse, also insbesondere umfassend die Kontakteinrichtungen und die Andruckeinrichtung, im Falle einer Wartungsmaßnahme deren beschleunigte Durchführung, da durch die Aufnahme der Funktionseinheiten in einem gemeinsamen Gehäuse ein schneller und einfacher Austausch des Stromübertragungsgehäuses ausreichend ist, um sämtliche Funktionseinheiten quasi in einem einzigen Handhabungsvorgang auszutauschen. Hierdurch verkürzen sich entsprechend die zur Durchführung von Wartungsmaßnahmen notwendigen Verweilzeiten von Wartungspersonal im Maschinenhaus einer Windkraftanlage.

Insbesondere, wenn zumindest eine der Kontakteinrichtungen aus einem Kohlenstoffmaterial, also etwa aus einem Kohlenstoff, insbesondere Graphit, als verschleißenden elektrischen Leiter enthaltenden Material, besteht, erweist sich die Stromübertragungseinrichtung als besonders vorteilhaft, da bei einem Kohlenstoffmaterial gegenüber beispielsweise einem Kontaktmaterial aus Metall oder auf Metallbasis ein erhöhter Kontaktabrieb zu verzeichnen ist.

Besonders vorteilhaft ist es, wenn der Kontaktreifen als ein an einer Aufnahmeeinrichtung des Rotorteils zur Aufnahme der Kontakteinrichtung angeordneter Ringflansch ausgebildet ist, da somit die Herstellung eines für den stromleitenden Körperkontakt notwendigen Rollkontakts zwischen der Rotoreinrichtung und den Rotorteil des Stromübertragungsgehäuses auf besonders einfacher Art und Weise herstellbar ist. Insbesondere dann, wenn der Kontaktreifen als ein von der Aufnahmeeinrichtung unabhängiges, mit der Aufnahmeeinrichtung verbindbares Bauteil ausgeführt ist, besteht die Möglichkeit, den Kontaktreifen als austauschbares Verschleißteil auszubilden, um etwa durch Auswahl eines geeigneten Materials für den Kontaktreifen eine besonders hohe Rollreibung zu realisieren, die die Gefahr von Schlupf zwischen dem Rotorteil und der Rotoreinrichtung weitestgehend reduziert.

Besonders vorteilhaft ist es auch, wenn der Kontaktreifen und die Aufnahmeeinrichtung elektrisch leitend ausgebildet sind, um die gesamte Körpermasse des Kontaktreifens und der Aufnahmeeinrichtung als elektrischen Leiter nutzen zu können.

Wenn der Kontaktreifen und die Aufnahmeeinrichtung aus unterschiedlichen Materialien gebildet sind, kann jeweils eine für den Kontaktreifen und die Aufnahmeeinrichtung funktionsoptimiertes Material ausgewählt werden, das den unterschiedlichen Funktionen des Kontaktreifens und der Aufnahmeeinrichtung, nämlich zum einen die Herstellung eines zuverlässigen Rollkontakts und zum anderen die mechanisch belastbare Aufnahme der Kontakteinrichtung, in besonderer Weise gerecht wird.

Wenn der Statorteil eine Befestigungseinrichtung zur Befestigung an einem Anschlussteil der Statoreinrichtung und eine Aufnahmeeinrichtung zur Aufnahme der Kontakteinrichtung aufweist, kann auf eine unmittelbare Befestigung der Kontakteinrichtung an der Statoreinrichtung bzw. dem Anschlussteil der Statoreinrichtung verzichtet werden, so dass die Kontakteinrichtung im Wesentlichen frei von Montagekräften im Statorteil bzw. im Stormübertragungsgehäuse der Stromübertragungseinrichtung aufgenommen wird.

Wenn gemäß einer weiteren bevorzugten Ausführungsform das Anschlussteil um eine parallel zur einer Drehachse der Rotoreinrichtung angeordnete Schwenkachse entgegen der Wirkung einer durch eine Federeinrichtung erzeugten Rückstellkraft drehbar an der Statoreinrichtung angelenkt ist, kann der Kontaktreifen am Rotorteil aus einem besonders verschleißarmen und steifen Material hergestellt werden, da eine durch die Rückstellkraft auf das Stromübertragungsgehäuse wirkende Vorspannkraft dafür sorgt, dass kleinste Formtoleranzen im Außenumfang des Kontaktreifens oder der Rotoreinrichtung durch eine durch Rückstellkraft bewirkte Schwenkbewegung ausgeglichen werden.

Wenn die Befestigungseinrichtung und die Aufnahmeeinrichtung des Statorteils elektrisch leitend ausgebildet sind, können zur Minimierung eines im Stromübertragungsgehäuse ausgebildeten Übergangswiderstands die gesamten Körpermassen der Befestigungseinrichtung und der Aufnahmeeinrichtung elektrisch leitend genutzt werden.

Wenn gemäß einer weiteren bevorzugten Ausführungsform die Aufnahmeeinrichtung des Statorteils als Achse für ein im Rotorteil aufgenommenes Drehlager ausgebildet ist, müssen durch die Kontakteinrichtungen keine Lagerkräfte übertragen werden, so dass keine entsprechenden Beschränkungen bei der Auswahl der Materialien für die Kontakteinrichtungen beachtet werden müssen, was auch die Auswahl von Materialien, insbesondere Kohlenstoffmaterialien für beide Kontakteinrichtungen zulässt, die aufgrund ihrer geringen Oberflächenfestigkeit für die einwandfreie Funktion der Kontakteinrichtungen vorteilhafte Schmiereigenschaften aufweisen.

Wenn die Andruckeinrichtung der Stromübertragungseinrichtung als Federanordnung ausgebildet ist und zwischen einem Kontakteinrichtungsträger der Aufnahmeeinrichtung und der Befestigungseinrichtung des Statorteils angeordnet ist, ist eine besonders raumsparende Aufnahme der Andruckeinrichtung im Stromübertragungsgehäuse möglich.

Wenn darüber hinaus der Kontakteinrichtungsträger kolbenartig ausgebildet ist mit einem Kolbenboden zur Anordnung der Kontakteinrichtung und einem als Hohlzylinder ausgebildeten Führungsteil zur axialen Führung in der Aufnahmeeinrichtung ist sichergestellt, dass durch die Andruckeinrichtung induzierte axiale Bewegungen der Kontakteinrichtung geradlinig ausgeführt werden.

Eine Aufnahme einer Federanordnung der Andruckeinrichtung im Führungsteil sorgt dafür, dass störende Kollisionen der Federanordnung mit der Aufnahmeeinrichtung vermieden werden können.

Wenn zur Aufnahme des Drehlagers im Rotorteil das Lager in einer aus einem elektrisch isolierenden Material gebildeten Lagerbuchse angeordnet ist, wird ein Stromübergang vom Rotorteil auf das Drehlager verhindert.

Nachfolgend wird eine bevorzugte Ausführungsform der Stromübertragungseinrichtung anhand der Zeichnung näher erläutert.

Es zeigen:
- **Fig. 1**: eine schematische Darstellung einer Anordnung einer Stromübertragungseinrichtung in einem Maschinenhaus einer Windkraftanlage;
- **Fig. 2**: eine vergrößerte Darstellung der Stromübertragungseinrichtung;
- **Fig. 3**: eine Seitenansicht der in **Fig. 2** dargestellten Stromübertragungseinrichtung;
- **Fig. 4**: eine Schnittdarstellung der in **Fig. 3** dargestellten Stromübertragungseinrichtung.

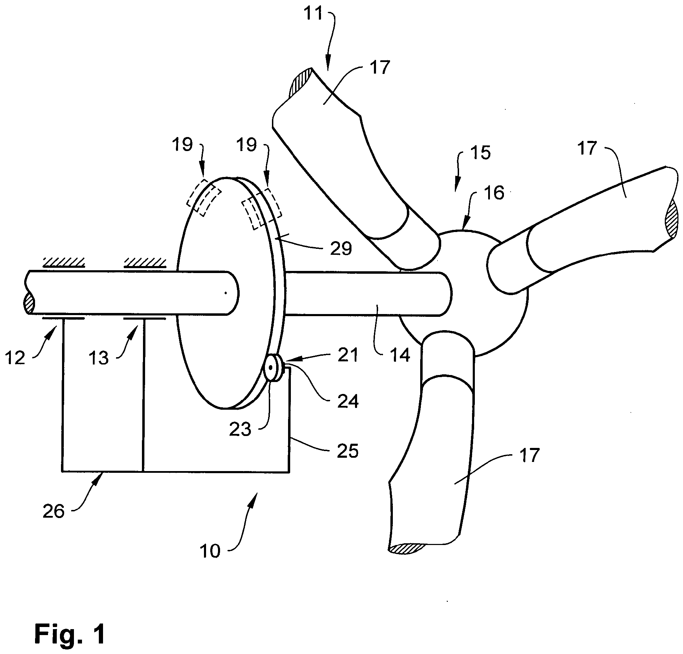

**Fig. 1** zeigt einen Teil eines Maschinenhauses 10 einer Windkraftanlage 11 mit einer in zwei Lagerstellen 12 und 13 gelagerten Rotorwelle 14, die stirnseitig aus dem Maschinenhaus 10 herausgeführt ist und an ihrem freien Ende mit einer Rotorblatteinrichtung 15 versehen ist, welche im vorliegenden Fall drei auf einer Rotornabe 16 montierte Rotorblätter 17 aufweist.

Die Rotorwelle 14 weist im Innern des Maschinenhauses 10 einen scheibenförmigen Wellenbund 18 auf, der an seiner Peripherie mit Bremseinrichtungen 19 versehen ist, die in nicht näher dargestellter Art und Weise mit Bremskolbeneinrichtungen versehen sind, welche im Zusammenwirken mit dem scheibenförmigen Wellenbund 18 eine Scheibenbremseinrichtung 20 ausbilden, die bei Bedarf ein Abbremsen einer Rotation der Rotorwelle 14 ermöglicht.

Wie weiter aus **Fig. 1** zu ersehen ist, ist am Umfang des Wellenbunds 18 eine Stromübertragungseinrichtung 21 mit einem Rotorteil 23, das sich in Rollkontakt mit einer durch eine Umfangsfläche des Wellenbunds 18 gebildeten Wellenbundkontaktfläche 29 befindet, und einem Statorteil 24, das über ein Anschlussteil 25 mit einer hier als Gestelleinrichtung 26 des Maschinenhauses 10 ausgebildeten Statoreinrichtung verbunden ist. Abweichend von dem in **Fig.1** dargestellten Ausführungsbeispiel kann die Stromübertragungseinrichtung 21 bzw. das Rotorteil 23 auch unmittelbar mit der Rotorwelle 14 in Kontakt sein.

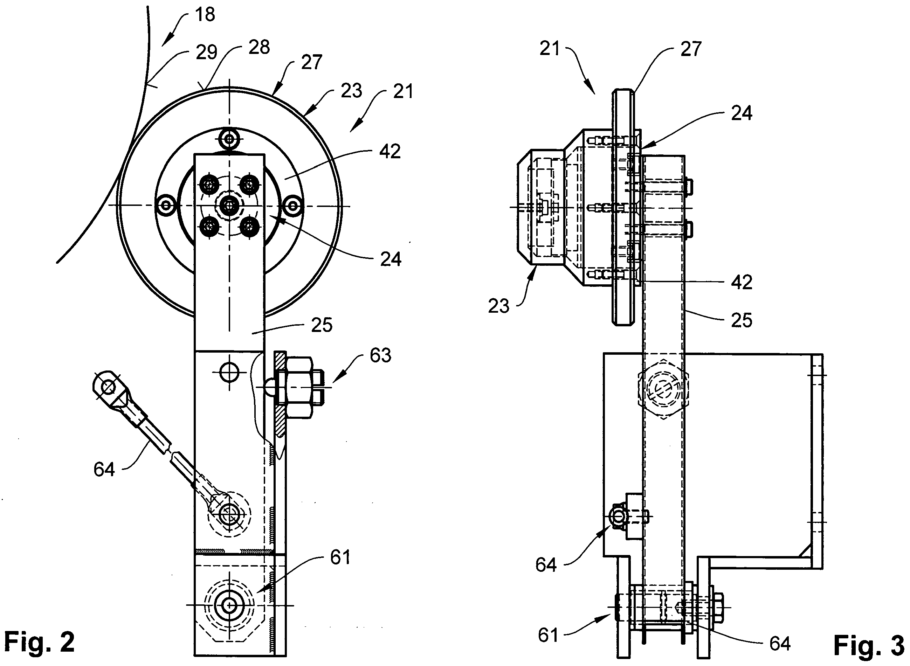

Die **Fig. 2 und 3** zeigen die Stromübertragungseinrichtung 21 in einer vergrößerten Ansicht mit dem Rotorteil 23, das im vorliegenden Fall einen als Ringflansch ausgebildeten Kontaktreifen 27 aufweist, der mit seiner durch die äußere Umfangsfläche gebildeten Reifenkontaktfläche 28 an der Wellenbundkontaktfläche 29 des Wellenbunds 18 anliegt (**Fig. 1**).

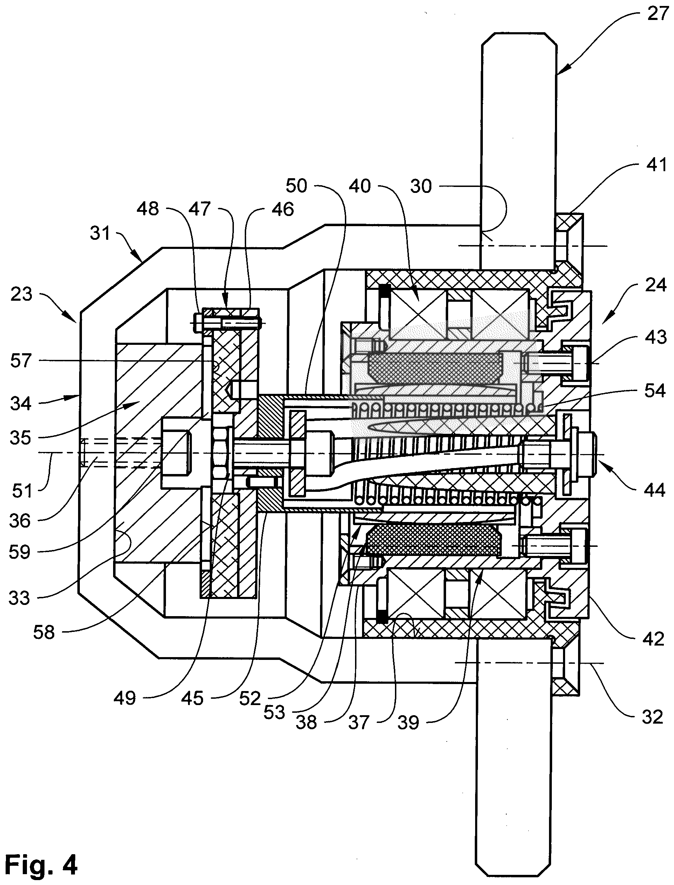

Wie insbesondere **Fig. 4** deutlich wird, ist im Falle des vorliegenden Ausführungsbeispiels der als Ringflansch ausgebildete Kontaktreifen 27 mit einem stirnseitigen Öffnungsrand 30 einer hier als becherförmiges Gehäuse ausgebildeten Aufnahmeeinrichtung 31 des Rotorteils 23 über eine Verschraubung 32 lösbar verbunden. Die Aufnahmeeinrichtung 31 ist an einer Innenseite 33 einer Bodenwandung 34 mit einer, hier aus Kohlenstoffmaterial gebildeten, im Wesentlichen scheibenförmigen Kontakteinrichtung 35 versehen, die über eine Verschraubung 36 an der Bodenwandung 34 befestigt ist.

Zur drehbaren Lagerung des Rotorteils 23 auf dem Statorteil 24 ist zwischen einer im Rotorteil 23 bzw. in der Aufnahmeeinrichtung 31 des Rotorteils 23 ausgebildeten Lageraufnahme 37 und einer an einer Aufnahmeeinrichtung 38 des Statorteils 24 ausgebildeten inneren Lageraufnahme 39 eine hier als Wälzlagereinrichtung ausgebildete Drehlageranordnung 40 vorgesehen. Zur elektrisch isolierenden Aufnahme des Drehlagers 40 in der äußeren Lageraufnahme 37 des Rotorteils 23 ist hier eine aus elektrisch isolierendem Material ausgebildete äußere Lagerbuchse 41 vorgesehen.

Wie insbesondere **Fig. 4** zeigt, ist die hier als Aufnahmehülse ausgebildete Aufnahmeeinrichtung 38 stirnseitig an eine hier im Wesentlichen scheibenförmig ausgebildete Befestigungseinrichtung 42, die zur Verbindung mit dem Anschlussteil 25 dient (**Fig. 3**), über eine Verschraubung 43 angeschlossen. In der Aufnahmeeinrichtung 38 des Statorteils 24 ist ein kolbenartig ausgebildeter Kontakteinrichtungsträger 44 angeordnet, der eine mit einem Kolbenboden 45 des Kontakteinrichtungsträgers 44 unter zwischenliegender Anordnung einer Druckplatte 46 verbundene Kontakteinrichtung 47 aufweist, die scheibenförmig ausgebildet ist und im Falle des vorliegenden Ausführungsbeispiels ebenfalls aus Kohlenstoffmaterial besteht. Die Kontakteinrichtung 47 ist über eine periphere Verschraubung 48 mit der Druckplatte 46 verbunden, welche ihrerseits über eine Verschraubung 49 mit dem Kolbenboden 45 verbunden ist.

Ausgehend vom Kolbenboden 45 des Kontakteinrichtungsträgers 44 erstreckt sich axial ein als Hohlzylinder ausgebildetes Führungsteil 50 des Kontakteinrichtungsträgers 44, dass axial in Richtung einer Drehachse 51 des Rotorteils 23 im Statorteil 24 bzw. der Befestigungseinrichtung 42 des Statorteils 24 verschiebbar ist.

Zur Schwingungsdämpfung ist zwischen einer Führungsbuchse 52 zur Aufnahme des Führungsteils 50 und der inneren Lageraufnahme 39 des Statorteils 24 eine vorzugsweise aus Gummimaterial ausgebildete Dämpferanordnung 53 vorgesehen.

Wie ferner aus **Fig. 4** zu ersehen ist, befindet sich zwischen der Befestigungseinrichtung 42 und dem Kontakteinrichtungsträger 44 eine hier durch eine Federanordnung gebildete Andruckeinrichtung 54, die konzentrisch zur Drehachse 51 eine Schraubenfeder 56 aufweist, die sich mit einem Ende an der Befestigungseinrichtung 42 und mit dem anderen Ende am Kolbenboden 45 des Kontakteinrichtungsträgers 44 abstützt.

Wie sich aus den vorstehenden Erläuterungen bezugnehmend auf die **Fig. 4** ergibt, ermöglicht es die Andruckeinrichtung 54 eine axiale Vorspannung auf den Kolbenboden 45 auszuüben, so dass bei einer Relativdrehung der im Rotorteil 23 aufgenommenen Kontakteinrichtung 35 gegenüber der im Statorteil 24 aufgenommenen Kontakteinrichtung 47 ein flächiger Kontakt zwischen einander gegenüberliegenden Kontaktflächen 57 und 58 der Kontakteinrichtungen 35 und 47 gegeben ist. Durch eine Strukturierung der Oberfläche der Kontakteinrichtung 35 vermittels radialer Flächennuten 59 ist es möglich, die Kontaktfläche 57 entsprechend zu segmentieren, um gegebenenfalls eine zu starke Aufheizung infolge eines Reibkontakts zwischen den Kontaktflächen 57 und 58 entgegenzuwirken.

Wie insbesondere die **Fig. 2** und **3**zeigen, ist die Befestigungseinrichtung 42 des Statorteils 24 mit dem hier als Gelenkstab ausgebildeten Anschlussteil 25 über ein Schwenkgelenk 61 an die Gestelleinrichtung 26 des Maschinenhauses 10 angeschlossen. Auf den Gelenkstab 60 wirkt eine in ihrer Vorspannung veränderbare, zwischen der Gestelleinrichtung 26 und dem Gelenkstab 60 angeordnete Federeinrichtung 63, die zur Sicherstellung eines für einen Rollkontakt ausreichenden Kontaktdrucks zwischen der Wellenbundkontaktfläche 29 der Rotorwelle 14 und der Reifenkontaktfläche 28 des Rotorteils 23 sorgt. Wie ferner insbesondere aus **Fig. 3** zu ersehen ist, ist das Schwenkgelenk 61 mit einer isolierenden Gelenkbuchse 64 versehen, so dass ein von der Rotorwelle über das Rotorteil 23 und das Statorteil 24 auf den Gelenkstab 60 übertragener Stromfluss nicht auf die Gestelleinrichtung 26 übertragen wird, sondern vom Gelenkstab 60 über einen, hier als so genanntes Stromband 64 ausgebildeten Leiter an eine Erdungsleitung abgeleitet werden kann.

## Patentansprüche

1. Stromübertragungseinrichtung (21) zur Übertragung von elektrischen Strömen zwischen einer Rotoreinrichtung (14) und einer Statoreinrichtung (26), insbesondere Blitzschutzeinrichtung für Windkraftanlagen, mit einem Stromübertragungsgehäuse, umfassend einen Statorteil (24) zur Ausbildung eines Stromübertragungskontakts mit der Statoreinrichtung und einen Rotorteil (23) zur Ausbildung eines Stromübertragungskontakts mit der Rotoreinrichtung, wobei der Statorteil und der Rotorteil jeweils eine drehfest mit dem Statorteil bzw. dem Rotorteil verbundene Kontakteinrichtung (35, 47) aufweisen, die auf einer Drehachse (51) des Rotorteils angeordnet sind und vermittels einer axial wirkenden Andruckeinrichtung (54) mit ihren einander zugewandten Kontaktflächen (57, 58) gegeneinander gedrückt werden, wobei der Rotorteil des Stromübertragungsgehäuses mit einem äußeren Kontaktreifen (27) versehen ist, der zur Herstellung eines Rollkontakts zwischen dem Rotorteil und der Rotoreinrichtung dient,
**dadurch gekennzeichnet,**
**dass** zur drehbaren Lagerung des Rotorteils (23) auf dem Statorteil (24) zwischen einer in einer Aufnahmeeinrichtung (31) des Rotorteils (23) ausgebildeten Lageraufnahme (37) und einer an einer Aufnahmeeinrichtung (38) des Statorteils (24) ausgebildeten inneren Lageraufnahme (39) eine Drehlageranordnung (40) angeordnet ist.

2. Stromübertragungseinrichtung nach Anspruch 1,
**dadurch gekennzeichnet,**
**dass** zumindest eine der Kontakteinrichtungen (35, 47) aus einem Kohlenstoffmaterial besteht.

3. Stromübertragungseinrichtung nach Anspruch 1 oder 2,
**dadurch gekennzeichnet,**
**dass** der Kontaktreifen (27) als ein an einer Aufnahmeeinrichtung (31) des Rotorteils (23) zur Aufnahme der Kontakteinrichtung (35) angeordneter Ringflansch ausgebildet ist.

4. Stromübertragungseinrichtung nach einem der vorangehenden Ansprüche,
**dadurch gekennzeichnet,**
**dass** der Kontaktreifen (27) als ein von der Aufnahmeeinrichtung (31) unabhängiges, mit der Aufnahmeeinrichtung verbindbares Bauteil ausgeführt ist.

5. Stromübertragungseinrichtung nach einem der vorangehenden Ansprüche,
**dadurch gekennzeichnet,**
**dass** der Kontaktreifen (27) und die Aufnahmeeinrichtung (31) elektrisch leitend ausgebildet sind.

6. Stromübertragungseinrichtung nach Anspruch 5,
**dadurch gekennzeichnet,**
**dass** der Kontaktreifen (27) und die Aufnahmeeinrichtung (31) aus unterschiedlichen Materialien gebildet sind.

7. Stromübertragungseinrichtung nach einem der vorangehenden Ansprüche,
**dadurch gekennzeichnet,**
**dass** der Statorteil (24) eine Befestigungseinrichtung (42) zur Befestigung an einem Anschlussteil (65) der Statoreinrichtung (26) und eine Aufnahmeeinrichtung (38) zur Aufnahme der Kontakteinrichtung (47) aufweist.

8. Stromübertragungseinrichtung nach einem der vorangehenden Ansprüche,
**dadurch gekennzeichnet,**
**dass** das Anschlussteil (25) um eine parallel zu einer Drehachse der Rotoreinrichtung (14) angeordnete Schwenkachse entgegen der Wirkung einer durch eine Federeinrichtung (63) erzeugten Rückstellkraft drehbar an der Statoreinrichtung (26) angelenkt ist.

9. Stromübertragungseinrichtung nach Anspruch 7 oder 8,
**dadurch gekennzeichnet,**
**dass** die Befestigungseinrichtung (42) und die Aufnahmeeinrichtung (38) elektrisch leitend ausgebildet sind

10. Stromübertragungseinrichtung nach einem der Ansprüche 7 bis 8,
**dadurch gekennzeichnet,**
**dass** die Aufnahmeeinrichtung (38) des Statorteils (24) als Achse für ein im Rotorteil (23) aufgenommenes Drehlager (40) ausgebildet ist.

11. Stromübertragungseinrichtung nach einem der vorangehenden Ansprüche,
**dadurch gekennzeichnet,**
**dass** die Andruckeinrichtung (54) als Federanordnung ausgebildet ist und zwischen einem Kontakteinrichtungsträger (44) der Aufnahmeeinrichtung (38) und der Befestigungseinrichtung (42) des Statorteils (24) angeordnet ist.

12. Stromübertragungseinrichtung nach Anspruch 11,
**dadurch gekennzeichnet,**
**dass** der Kontakteinrichtungsträger (44) kolbenartig ausgebildet ist mit einem Kolbenboden (45) zur Anordnung der Kontakteinrichtung (47) und einem als Hohlzylinder ausgebildeten Führungsteil (50) zur axialen Führung in der Aufnahmeeinrichtung (38).

13. Stromübertragungseinrichtung nach Anspruch 12,
**dadurch gekennzeichnet,**
**dass** der Führungsteil (50) zur Aufnahme einer Federanordnung der Andruckeinrichtung (54) dient.

14. Stromübertragungseinrichtung nach einem der vorangehenden Ansprüche,
**dadurch gekennzeichnet,**
**dass** zur Aufnahme des Drehlagers (40) im Rotorteil (23) das Drehlager in einer aus einem elektrisch isolierenden Material gebildeten Lagerbuchse (41) angeordnet ist.

## Claims

1. A power transmission device (21) for transmitting electric currents between a rotor device (14) and a stator device (26), in particular lightning protection device for wind power plants, having a power transmission casing, comprising a stator part (24) for forming a power transmission contact with the stator device and a rotor part (23) for forming a power transmission contact with the rotor device, the stator part and the rotor part each comprising a contacting device (35, 47) connected to the stator part and the rotor part, respectively, in a torque-proof manner, said contacting devices being arranged on a rotary axis (51) of the rotor part and being pressed against each other with their contacting surfaces (57, 58), which are facing each other, by means of an axially acting pressure device (54), the rotor part of the power transmission casing being provided with an outer contacting ring (27) which serves for producing a rolling contact between the rotor part and the rotor device,
**characterized in that**
a pivot bearing arrangement (40) is arranged on the stator part (24) between a bearing receiver (37) formed in a receiving device (31) of the rotor part (23) and an internal bearing receiver (39) formed at a receiving device (38) of the stator part (24) for rotatably mounting the rotor part (23).

2. The power transmission device according to claim 1,
**characterized in that**
at least one of the contacting devices (35, 47) is made of a carbon material.

3. The power transmission device according to claim 1 or 2,
**characterized in that**
the contacting ring (27) is formed as a ring flange arranged at a receiving device (31) of the rotor part (23) for receiving the contacting device (35).

4. The power transmission device according to any one of the preceding claims,
**characterized in that**
the contacting ring (27) is realized as a component which is independent from the receiving device (31) and can be connected to the receiving device.

5. The power transmission device according to any one of the preceding claims,
**characterized in that**
the contacting ring (27) and the receiving device (31) are formed electrically conductive.

6. The power transmission device according to claim 5,
**characterized in that**
the contacting ring (27) and the receiving device (31) are made of different materials.

7. The power transmission device according to any one of the preceding claims,
**characterized in that**
the stator part (24) comprises a fastening device (42) for fastening to a connecting part (65) of the stator device (26) and a receiving device (38) for receiving the contacting device (47).

8. The power transmission device according to any one of the preceding claims,
**characterized in that**
the connecting part (25) is articulated rotatably at the stator device (26) around a pivoting axis arranged parallel to a rotary axis of the rotor device (14) against the force of a restoring force produced by a spring device (63).

9. The power transmission according to claim 7 or 8,
**characterized in that**
the fastening device (42) and the receiving device (38) are formed electrically conductive.

10. The power transmission device according to claim 7 or 8,
**characterized in that**
the receiving device (38) of the stator part (24) is formed as an axis for a pivot bearing (40) received in the rotor part (23).

11. The power transmission device according to any one of the preceding claims,
**characterized in that**
the pressure device (54) is formed as a spring arrangement and is arranged between a contacting device carrier (44) of the receiving device (38) and the fastening device (42) of the stator part (24).

12. The power transmission device according to claim 11,
**characterized in that**
the contacting device carrier (44) is formed like a piston having a piston crown (45) for arranging the contacting device (47) and a guide part (50) formed as a hollow cylinder for axial guidance in the receiving device (38).

13. The power transmission device according to claim 12,
**characterized in that**
the guide part (50) serves to receive a spring arrangement of the pressure device (54).

14. The power transmission device according to any one of the preceding claims,
**characterized in that**
the pivot bearing is arranged in a bearing bush (41) made of electrically insulating material for receiving the pivot bearing (40) in the rotor part (23).

## Revendications

1. Dispositif de transmission de courant (21) pour transmettre des courants électriques entre un dispositif de rotor (14) et un dispositif de stator (26), en particulier un parafoudre pour éoliennes, ayant un boîtier de transmission de courant, comprenant un part de stator (24) pour former un contact de transmission de courant avec le dispositif de stator et un part de rotor (23) pour former un contact de transmission de courant avec le dispositif de rotor, ledit part de stator et ledit part de rotor chacun comprenant un dispositif de contact (35, 47) connecté solidairement en rotation avec le part de stator et le part de rotor, respectivement, lesdits dispositifs de contact étant disposés sur un axe rotatif (51) du part de rotor et étant pressés l'un à l'autre avec leurs surfaces de contact (57, 58), tournées l'une vers l'autre, au moyen d'un dispositif de pression (54) agissant axialement, ledit part de rotor du boîtier de transmission de courant étant pourvu d'un anneau de contact (27) extérieur qui sert à produire un contact roulant entre le part de rotor et le dispositif de rotor,
**caractérisé en ce qu'**
un ensemble palier pivotant (40) est disposé sur le part de stator (24) entre un receveur de palier (37) formé dans un dispositif de receveur (31) du part de rotor (23) et un receveur de palier (39) intérieur formé à un dispositif de receveur (38) du part de stator (24) pour monter dans une manière rotative le part de rotor (23).

2. Dispositif de transmission de courant selon la revendication 1,
**caractérisé en ce qu'**
au moins un des dispositifs de contact (35, 47) est produit en un matériau carbone.

3. Dispositif de transmission de courant selon la revendication 1 ou 2,
**caractérisé en ce que**
l'anneau de contact (27) est formé comme une bride annulaire disposée à un dispositif de receveur (31) du part de rotor (23) pour recevoir le dispositif de contact (35).

4. Dispositif de transmission de courant selon l'une quelconque des revendications précédentes,
**caractérisé en ce que**
l'anneau de contact (27) est réalisé comme un composant qui est indépendant du dispositif de receveur (31) et peut être connecté avec le dispositif de receveur.

5. Dispositif de transmission de courant selon l'une quelconque des revendications précédentes,
**caractérisé en ce que**
l'anneau de contact (27) et le dispositif de receveur (31) sont formés dans une manière électriquement conductrice.

6. Dispositif de transmission de courant selon la revendication 5,
**caractérisé en ce que**
l'anneau de contact (27) et le dispositif de receveur (31) sont produits en matériaux différents.

7. Dispositif de transmission de courant selon l'une quelconque des revendications précédentes,
**caractérisé en ce que**
le part de stator (24) comprend un dispositif de fixation (42) pour être fixé à un part de connexion (65) du dispositif de stator (26) et un dispositif de receveur (38) pour recevoir le dispositif de contact (47).

8. Dispositif de transmission de courant selon l'une quelconque des revendications précédentes,
**caractérisé en ce que**
le part de connexion (25) est articulé au dispositif de stator (26) dans une manière rotative autour un axe pivotant, disposé parallèle à un axe rotatif du dispositif de rotor (14), au-devant de l'effet d'une force de rappel produite par un dispositif de ressort (63).

9. Dispositif de transmission de courant selon la revendication 7 ou 8,
**caractérisé en ce que**
le dispositif de fixation (42) et le dispositif de receveur (38) sont formés dans une manière électriquement conductrice.

10. Dispositif de transmission de courant selon la revendication 7 ou 8,
**caractérisé en ce que**
le dispositif de receveur (38) du part de stator (24) est réalisé comme un axe pour un palier pivotant (40) reçu dans le part de rotor (23).

11. Dispositif de transmission de courant selon l'une quelconque des revendications précédentes,
**caractérisé en ce que**
le dispositif de pression (54) est réalisé comme un ensemble ressort et est disposé entre un support de dispositif de contact (44) du dispositif de receveur (38) et le dispositif de fixation (42) du part de stator (24).

12. Dispositif de transmission de courant selon la revendication 11,
**caractérisé en ce que**
le support de dispositif de contact (44) est réalisé comme un piston ayant une tête de piston (45) pour disposer le dispositif de contact (47) et un part de guidage (50) formé comme un cylindre creux pour le guidage axial dans le dispositif de receveur (38).

13. Dispositif de transmission de courant selon la revendication 12,
**caractérisé en ce que**
le part de guidage (50) sert à recevoir un ensemble ressort du dispositif de pression (54).

14. Dispositif de transmission de courant selon l'une quelconque des revendications précédentes,
**caractérisé en ce que**
le palier pivotant est disposé dans un coussinet (41) en matériau électriquement isolant pour recevoir le palier pivotant (40) dans le part de rotor (23).
